# EUROPÄISCHE PATENTANMELDUNG

(11) **EP 1 401 074 A2**
(43) Veröffentlichungstag der Anmeldung: **24.03.2004**
(21) Anmeldenummer: 03020212.1
(22) Anmeldetag: 05.09.2003
(51) Int. Cl.: H02H 1/06

(54) **Elektronischer Zweileiterschalter und zugehörige Spannungsversorgung**

(30) Priorität: 18.09.2002 DE 10243386
(71) Anmelder: SIEMENS AKTIENGESELLSCHAFT, 80333 München (DE)
(72) Erfinder: Zirkl, Siegmar, 93051 Regensburg (DE)

(57) **Zusammenfassung**

Es wird ein Zweileiterschalter (1) und eine dazugehörige, preisgünstige und verlustarme Spannungsversorgung (16) angegeben, mit einem Spannungsbegrenzungselement (5) zum Auskoppeln einer gegenüber der Netzspannung (Un) reduzierten Speisespannung (Us) aus einer Netzleitung (L) an ein mit dem Spannungsbegrenzungselement (5) verbundenes Speichermodul (8), an dem eine Versorgungsspannung (Uv) abgreifbar ist, und mit einer, dem Spannungsbegrenzungselement (5) parallelgeschalteten, verlustarmen Bypassleitung (12) sowie mit einer Regelschaltung (14), die bedarfsangepasst zur Aufladung des Speichermoduls (8) eine Sperrung der Bypassleitung (12) herbeiführt.

## Beschreibung

Die Erfindung bezieht sich auf einen elektronischen Zweileiterschalter und eine zugehörige Spannungsversorgung.

In der Installationstechnik wird heutzutage oft ein elektronischer Zweileiterschalter anstelle eines klassischen, mit Kontakten versehenen Aus-Schalters eingesetzt. Durch den Einsatz eines elektronischen Zweileiterschalters erhält die Schalterstelle eine höherwertige Funktionalität. So ist es möglich, die Schalterstelle mit einer Ansteuerelektronik wie beispielsweise einer Fernsteuerung, einem Präsenzmelder, einem Zeitschalter auszurüsten. Zur elektrischen Versorgung dieser Elektronik ist ein elektronischer Zweileiterschalter häufig mit einer integrierten Spannungsversorgung versehen.

Ein solcher Zweileiterschalter ist dabei meistens für eine Unterputz-Installation vorgesehen. Insbesondere hierbei ist an die Spannungsversorgung die Kernanforderung zu setzen, dass diese eine möglichst geringe Verlustleistung produzieren soll. Diese Verlustleistung wird nämlich als Wärme an die Umgebung des Schalters abgegeben. Jedoch kann diese Wärme in einer Unterputzdose nur in begrenztem Rahmen abgeführt werden, so dass die Gefahr einer Aufheizung des Schalters in besonderem Maße gegeben ist. Weiterhin soll eine solche Spannungsversorgung möglichst preiswert realisierbar sein.

Häufig ist zur Auskopplung der Versorgungsspannung aus dem Netz ein in eine Netzleitung geschalteter Halbleiterschalter, z.B. ein Triac oder eine Schaltung von Feldeffekttransistoren (FETs oder MOSFETs), vorgesehen. Dieser Halbleiterschalter ist dabei derart beschaltet, dass nach Art einer Phasenanschnittsteuerung oder Phasenabschnittsteuerung ein Teil jeder Halbwelle der Netzspannung aus der Hauptleitung "ausgeschnitten" und einem Spannungsnetzteil zugeführt wird, das wiederum die Elektronik versorgt. In nachteiliger Weise ist dabei ein vergleichsweise hoher Aufwand für die Funkentstörung des Schalters erforderlich. Zudem müssen die verwendeten Halbleiterbauteile netzspannungsfest sein und sind dementsprechend teuer. Zudem ist die Eignung einer Phasenanschnitt- oder Phasenabschnittsteuerung abhängig von der angeschlossenen Last (z.B. ohmsche, induktive oder kapazitive Lastart).

Der Erfindung liegt die Aufgabe zugrunde, eine im Hinblick auf die oben genannten Anforderungen ertüchtigte Spannungsversorgung anzugeben. Des Weiteren soll ein besonders geeigneter Zweileiterschalter mit einer solchen Spannungsversorgung geschaffen werden.

Bezüglich einer Spannungsversorgung wird die Aufgabe erfinderisch gelöst durch die Merkmale des Anspruchs 1. Dabei ist ein in einer Netzleitung angeordnetes Spannungsbegrenzungselement vorgesehen, über dem eine gegenüber der Netzspannung reduzierte Speisespannung abgegriffen und einem Speichermodul zugeführt ist. An dem Speichermodul ist wiederum eine Versorgungsspannung abgreifbar. Das Spannungsbegrenzungselement ist dabei mit einer verlustarmen Bypassleitung überbrückt, die von einer Regelschaltung bedarfsangepasst zur Aufladung des Speichermoduls gesperrt wird. Der Begriff "bedarfsangepasst" wird dabei dahingehend verstanden, dass eine Sperrung der Bypassleitung selbsttätig stets dann erfolgt, wenn eine Aufladung oder Wiederaufladung des Speichermoduls erforderlich ist, d.h. wenn der Ladezustand des Speichermoduls unter einen vorgegebenen Schwellwert abgesunken ist. Bezüglich eines Zweileiterschalters wird die Aufgabe erfindungsgemäß gelöst durch die Merkmale des Patentanspruchs 12. Danach ist einem elektronisch ansteuerbaren Netzleitungsschalter eine erfindungsgemäße Spannungsversorgung nachgeschaltet.

In vorteilhafter Weise wird dem Netz bei der erfindungsgemäßen Spannungsversorgung nicht regelmäßig Energie entzogen, sondern stets nur in dem Umfang, der zur Aufladung des Speichermoduls erforderlich ist. Die bevorzugt aperiodisch aufeinanderfolgenden Intervalle, in denen die Aufladung das Speichermoduls erforderlich ist, und gegebenenfalls die Länge der Aufladephasen hängen dabei von der Belastung der Spannungsversorgung durch eine Ansteuerelektronik ab. Es ist jedoch erfindungsgemäß auch möglich, die Aufladephasen mit der Periode der Netzspannung zu synchronisieren. Die Bedarfsanpassung erfolgt in diesem Fall allein über die Variation der Länge der Aufladephasen, so dass - im Gegensatz zu einem gewöhnlichen Phasenanschnittsverfahren - wiederum eine unregelmäßige Energieentnahme stattfindet. Zwischen den Aufladephasen wird der Netzstrom auf diese Weise ungestört und ohne nennenswerten Verlust über die Bypassleitung der Last zugeleitet. Die im Spannungsbegrenzungselement erzeugte Verlustleistung tritt dagegen immer nur während der kurzzeitigen Aufladungsschübe auf. Im Zeitmittel gesehen ist diese Verlustleistung daher sehr gering. Dadurch, dass die durch die Aufladung des Speichermoduls verursachte Störung unregelmäßig auftritt, führt sie nur zu einer geringen elektromagnetischen Abstrahlung. Die Spannungsversorgung ist deshalb nach EMV-Kriterien besonders günstig. Die Spannungsversorgung kann zudem kostengünstig hergestellt werden. Da nämlich die an der Spannungsversorgung abfallende Spannung durch das in die Netzleitung geschaltete Spannungsbegrenzungselement begrenzt ist, können für alle weiteren Bauteile kostengünstige Niederspannungstypen eingesetzt werden. Da die Spannungsversorgung nur nach Bedarf eine betragsmäßig fest begrenzte Spannung aus dem Netz abzieht, arbeitet sie sowohl bei unterschiedlichen Netzfrequenzen als auch an verschiedenen Netzspannungen.

Bevorzugt ist das Spannungsbegrenzungselement durch eine bidirektionale Zener-Diode, insbesondere eine so genannte Transzorb-, Transil- oder TVS-Diode realisiert. Solche Dioden sind für eine relativ hohe Dauerleistung und vor allem eine sehr hohe Kurzschlussleistung geeignet. Alternativ kann das Spannungsbegrenzungselement durch zwei oder mehrere, antiparallel geschaltet unidirektionale Zener-Dioden realisiert sein. Des Weiteren kann als spannungsbegrenzendes Element ein entsprechend angesteuerter Triac oder MOSFET eingesetzt sein.

Das Speichermodul ist in preisgünstiger und effektiver Weise bevorzugt mit einem Kondensator und einem diesem vorgeschalteten Gleichrichter ausgeführt.

In bevorzugter Ausführung umfasst die Regelschaltung einen zur Messung der Versorgungsspannung eingangsseitig mit dem Speichermodul verbundenen Komparator, der ausgangsseitig zur Steuerung eines in die Bypassleitung geschalteten Bypass-Schaltelements mit dessen Steuereingang verbunden ist. Sinkt die Versorgungsspannung unter einen, dem Komparator vorgegebenen Referenzwert, so gibt dabei der Komparator ein Steuersignal auf das Bypass-Schaltelement, welches die Öffnung des Bypass-Schaltelements auslöst und die Bypassleitung somit sperrt. Ebenso veranlasst der Komparator wiederum ein Schließen des Bypass-Schaltelements, und somit eine Öffnung der Bypassleitung, sobald das Speichermodul wieder aufgeladen ist. Mit einem Komparator ist eine besonders präzise Steuerung des Bypass-Schaltelements in Abhängigkeit des Ladezustands des Speichermoduls ermöglicht. Bevorzugt wird als Bypass-Schaltelement ein Feldeffekttransistor, insbesondere ein selbstsperrender MOSFET, verwendet. Ein solcher Feldeffekttransistor zeichnet sich in durchgeschaltetem Zustand durch einen besonders niedrigen Durchgangswiderstand im Leitungskanal bei äußerst kompakter Größe aus. Der Feldeffekttransistor ist vorzugsweise ein so genannter "Logic level"-Typ, der schon bei einer sehr geringen Ansteuerspannung einen besonders geringen Einschaltwiderstand aufweist. In einer weiteren vorteilhaften Ausführung ist das Bypass-Schaltelement durch zwei anti-seriell in die Bypassleitung geschaltete MOSFETS mit parallel gelegten Gate-Anschlüssen realisiert. Eine solche Schaltung wird üblicherweise bei einem Dimmer-Konzept verwendet. Alternativ dazu ist vorgesehen, einen Relaiskontakt als Bypass-Schaltelement zu verwenden.

Vorteilhafterweise ist innerhalb der Regelschaltung dem Komparator und dem Bypass-Schaltelement ein Transistor zwischengeschaltet. Dabei ist die Basis des Transistors mit dem Ausgang des Komparators geschaltet, während der Kollektor des Transistors mit dem Steuereingang des Bypass-Schaltelements verbunden ist. Durch eine solche zweistufige Schaltung wird das Schaltverhalten der Regelschaltung stabilisiert und Schaltschwingungen unterdrückt.

Der Gleichrichter ist vorzugsweise als Brückengleichrichter ausgebildet. Je nach der Spezifikation der Schaltung ist dabei der Einsatz preisgünstiger normaler Dioden oder besonders verlustarmer Schottky-Dioden besonders günstig. Denkbar ist ferner auch der Einsatz einer sogenannten "geschalteten Gleichrichterbrücke" unter Verwendung von Feldeffekttransistoren.

Zweckmäßigerweise ist in der Bypassleitung ein Strombegrenzungselement vorgesehen, welches Stromspitzen in der Bypassleitung dämpft, die zu einer Überlastung des Bypass-Schaltelements führen würden. Solche Stromspitzen treten z.B. bei Schaltvorgängen oder einem Kurzschluss in der Netzleitung auf. Eine besonders geeignete Realisierung des Strombegrenzungselements umfasst einen in die Bypassleitung geschalteten Messwiderstand sowie einen über die Basis-Emitter-Strecke dem Messwiderstand parallel geschalteten und kollektorseitig mit dem Steuereingang des Bypass-Schaltelements verbundenen Transistor. Übersteigt bei dieser Schaltung die am Messwiderstand abfallende Spannung einen Grenzwert, so wirkt der Transistor auf den Steuereingang des Bypass-Schaltelements zurück und sperrt die Bypassleitung.

In einem die erfindungsgemäße Spannungsversorgung enthaltenden Zweileiterschalter ist bevorzugt ein weiteres Netzteil, insbesondere Gleichspannungsnetzteil, vorgesehen, welches eingangsseitig mit dem Eingang des Netzleitungsschalters und ausgangsseitig mit dem Speichermodul verbunden ist. Ein solches Netzteil ist zweckmäßig, um die Versorgungsspannung auch bei geöffnetem Netzleitungsschalter aufrecht zu erhalten. Das Netzteil kann beispielsweise als Widerstandsnetzteil, Kondensatornetzteil, Schaltnetzteil oder Transformator ausgeführt sein.

Der Netzleitungsschalter ist bevorzugt durch einen Relaiskontakt realisiert. Alternativ ist ein elektronischer Schalter in Form z.B. eines Triac oder einer Feldeffekttransistorenschaltung vorgesehen.

In einer bevorzugten Ausführung ist ein dem Netzleitungsschalter vorgeschalteter Netzstrombegrenzer vorgesehen, der einen schädlichen Überstrom in der Netzleitung, wie er beispielsweise bei einem Kurzschluss entsteht, verhindert. In einfacher Weise ist ein solcher Netzstrombegrenzer durch eine Kleinsicherung realisiert. Alternativ dazu ist der Netzstrombegrenzer durch einen niederohmigen Widerstand realisierbar, der den Kurzschlussstrom auf ein verträgliches Maß reduziert. Im Kurzschluss-Fall erfolgt die Abschaltung der Netzleitung hier durch den im Leiternetz vorschriftsmäßig vorhandenen Leitungsschutzschalter.

Die mit der Erfindung verknüpften Vorteile bestehen insbesondere darin, dass in dem Zweileiterschalter eine nennenswerte Verlustleistung nur bedarfsweise während kurzer Aufladungsschübe auftritt, die über die Zeit gemittelte Verlustleistung daher sehr gering ist. Aus diesem Grund kann die erfindungsgemäße Spannungsversorgung und der zugehörige Zweileiterschalter auch bei einem Unterputzgerät für eine besonders hohe Durchgangsleistung ausgelegt sein. Da das Speichermodul stets bedarfsgerecht wieder aufgeladen wird, kann auch versorgungsseitig eine vergleichsweise hohe Leistung bereitgestellt werden. Insbesondere bei Verwendung eines Relaiskontaktes als Netzleitungsschalter ist der Zweileiterschalter für alle elektrischen Lastarten geeignet. Der Schalter arbeitet außerdem weitgehend unabhängig von der Netzfrequenz und der Netzspannung. Der erfindungsgemäße Zweileiterschalter kann vorteilhaft auch für schaltbare Steckdosen, insbesondere PC-Steckdosen, verwendet werden.

Nachfolgend wird ein Ausführungsbeispiel der Erfindung anhand einer Zeichnung näher erläutert. Darin zeigen:
- FIG 1: in einem schematischen Blockschaltbild einen elektronischen Zweileiterschalter mit einer Spannungsversorgung,
- FIG 2: ein elektronisches Schaltbild des Zweileiterschalters gemäß FIG 1 und
- FIG 3: eine alternative schaltungstechnische Ausführung des Zweileiterschalters gemäß FIG 1.

Einander entsprechende Teile sind in den Figuren mit den gleichen Bezugszeichen versehen.

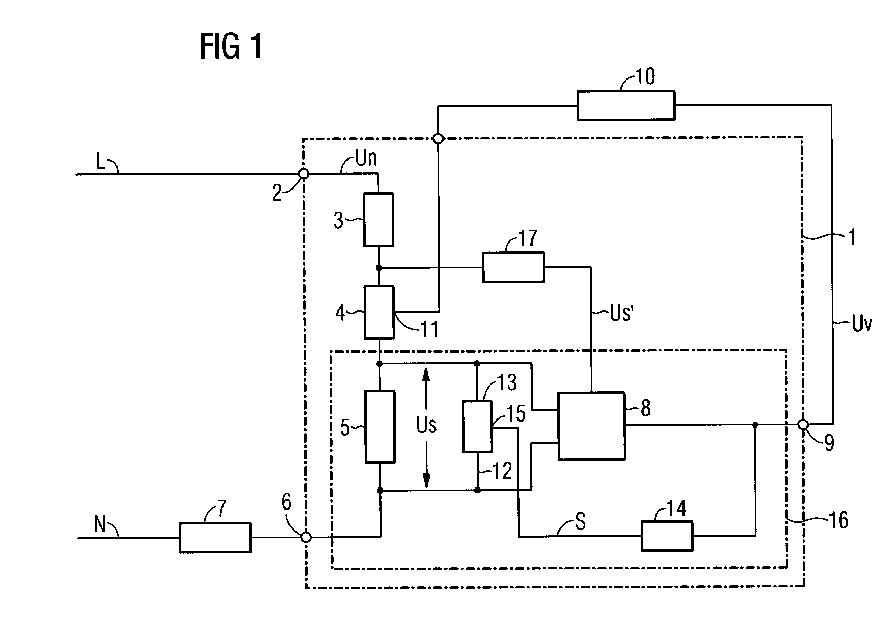

Dem in FIG 1 dargestellten Zweileiterschalter 1 wird über eine mit einem Phasenleiter L eines Stromnetzes kontaktierte Eingangsklemme 2 die Netzspannung Un zugeführt. Die Eingangsklemme 2 ist über ein Netzstrombegrenzungselement 3 und einen Netzleitungsschalter 4 mit einem Spannungsbegrenzungselement 5 verbunden. Das Spannungsbegrenzungselement 5 ist ausgangsseitig mit einer Ausgangsklemme 6 des Zweileiterschalters 1 verbunden. Von dort wird der Netzstrom über eine Last 7 in den Nullleiter N des Leiternetzes geführt.

Bei geschlossenem Netzleitungsschalter 4 erzeugt das Spannungsbegrenzungselement 5 einen auf einen vorgegebenen Maximalwert begrenzten Spannungsabfall, der beidseitig des Spannungsbegrenzungselements 5 abgegriffen und als Speisespannung Us einem Speichermodul 8 zugeleitet wird. Das Speichermodul 8 ist ausgangsseitig mit einer Versorgungsklemme 9 des Zweileiterschalters 1 verbunden und stellt dort eine vom zeitlich oszillierenden Betrag der Netzspannung Un weitgehend unabhängige Versorgungsspannung Uv zur Verfügung.

Über die Versorgungsklemme 9 wird eine Steuerelektronik 10 mit der Versorgungsspannung Uv versorgt. Bei dieser Steuerelektronik 10 handelt es sich beispielsweise um ein externes Fernsteuerungsmodul für den Zweileiterschalter 1. Die Steuerelektronik 10 ist daher zur Betätigung des Netzleitungsschalters 4 ausgangsseitig mit dessen Steuereingang 11 verbunden.

Das Spannungsbegrenzungselement 5 ist durch eine verlustarme Bypassleitung 12 überbrückt. Mittels eines in die Bypassleitung 12 geschalteten Bypass-Schaltelements 13 kann dabei die Bypassleitung 12 nach Bedarf gesperrt oder geöffnet, d.h. elektrisch durchgängig gemacht werden. Zur Steuerung des Bypass-Schaltelements 13 ist eine Regelschaltung 14 vorgesehen, die ausgangsseitig mit dem Steuereingang 15 des Bypass-Schaltelements 13 sowie eingangsseitig an der Versorgungsspannung Uv liegt. Das Spannungsbegrenzungselement 5, das Speichermodul 8, das Bypass-Schaltelement 13 und die Regelschaltung 14 sowie die zugehörigen elektrischen Verbindungen bilden zusammen eine Spannungsversorgung 16 für den Zweileiterschalter 1.

Bei ausreichend geladenem Speichermodul 8 ist das Bypass-Schaltelement 13 geschlossen, d.h. elektrisch durchgängig. Dadurch ist das Spannungsbegrenzungselement 5 über die Bypassleitung 12 ohne nennenswerten Widerstand kurzgeschlossen und der Leitungsstrom fließt sehr verlustarm über das Netzstrombegrenzungselement 3, den Netzleitungsschalter 4 und die Bypassleitung 12 der Last 7 zu. Der Spannungsabfall am Spannungsbegrenzungselement 5 ist infolge der Überbrückung auf ein sehr geringes Maß reduziert. Es entsteht somit in der Spannungsversorgung 16 keine nennenswerte Verlustleistung und dementsprechend auch nur eine sehr geringe ohmsche Wärme. Das Speichermodul 8 wird andererseits während dieser Zeit auch nicht gespeist. Durch den Stromverbrauch einer angeschlossenen Steuerelektronik 10 wird das Speichermodul 8 daher allmählich entladen, was zu einem allmählichen Absinken der Versorgungsspannung Uv führt. Unterschreitet die Versorgungsspannung Uv einen vorgegebenen Grenzwert, so legt die Regelschaltung 14 ein Steuersignal S auf den Steuereingang 15, wodurch die Öffnung des Bypass-Schaltelements 13 herbeigeführt und die Bypassleitung 12 dadurch gesperrt wird. Der Netzstrom fließt jetzt durch das Spannungsbegrenzungselement 5 und die daran abfallende Speisespannung Us führt zu einer Aufladung des Speichermoduls 8, in deren Folge die Versorgungsspannung Uv wieder ansteigt. Überschreitet die Versorgungsspannung Uv einen vorgegebenen Grenzwert, so löst die Regelschaltung wiederum die Schließung des Bypass-Schaltelements 13 aus, worauf die Speisespannung Us zusammenbricht und der Netzstrom wieder verlustarm über die Bypassleitung 12 geführt wird.

Wird der Netzleitungsschalter 4 geöffnet, so ist damit auch die Versorgung der Spannungsversorgung 16 unterbrochen. Um eine Bereitstellung der Versorgungsspannung Uv auch in diesem Stand-by-Zustand zu gewährleisten, ist ein eingangsseitig dem Netzleitungsschalter 4 vorgeschaltetes hochohmiges Netzteil 17 vorgesehen, das zur Ausgabe einer Stand-by-Speisespannung Us' mit dem Speichermodul 8 verbunden ist.

Bricht im Fall eines Kurzschlusses im Leiternetz der Widerstand der Last 7 zusammen, so begrenzt das Netzstrombegrenzungselement 3 den durch die Netzleitung fließenden Kurzschlussstrom oder, z.B. bei Verwendung einer Sicherung als Netzstrombegrenzungselement 3, unterbindet den Stromfluss völlig.

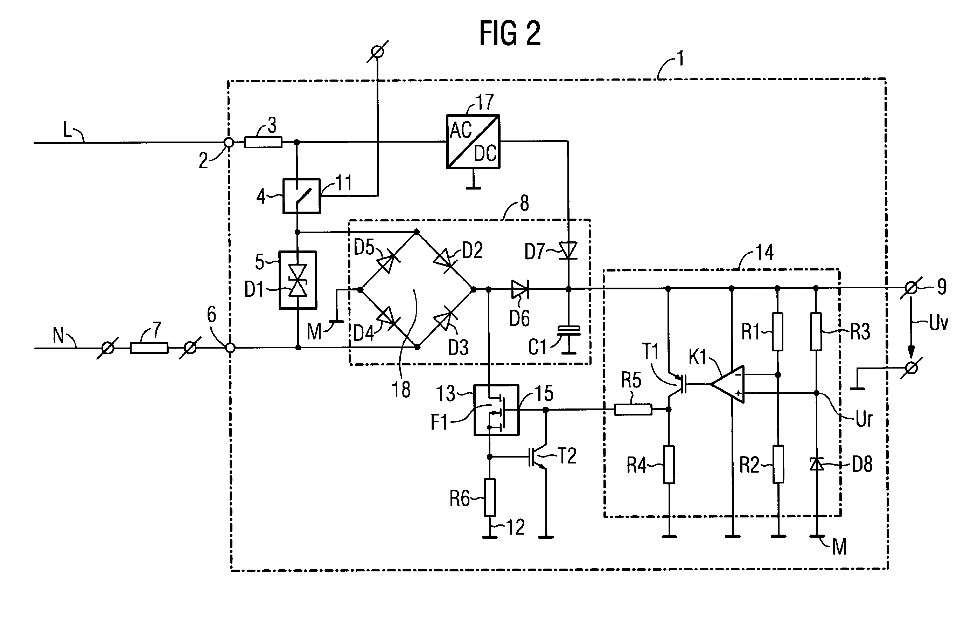

Eine schaltungstechnische Realisierung des oben beschriebenen Zweileiterschalters 1 mit einer Kleinsicherung als Netzstrombegrenzungselement 3, einem als Relaiskontakt ausgebildeten Netzleitungsschalter 4 und einem Spannungsbegrenzungselement 5 in Form einer bidirektionalen Zener-Diode D1 mit einer bevorzugten Durchlassspannung zwischen 6,5 Volt und 12 Volt ist in Fig. 2 gezeigt. Das Speichermodul 8 umfasst einen zur Zener-Diode D1 parallel geschalteten Brückengleichrichter 18 sowie einen diesem nachgeschalteten Kondensator C1, insbesondere Elektrolytkondensator. Die Dioden D2 und D3 des Brückengleichrichters 18 sind dabei jeweils in Durchlassrichtung in die von der Zener-Diode D1 zum Kondensator C1 führenden Leitungen geschaltet. Über die übrigen beiden Dioden D4 und D5 des Brückengleichrichters 18 sind die Ausgänge der Zener-Diode D1 jeweils in Sperrrichtung auf einen internen Massereferenzpunkt M gelegt. Um die Verlustleistung möglichst gering zu halten, sind die Dioden D2 bis D5 bevorzugt Schottky-Dioden. Eine weitere, dem Brückengleichrichter 18 und dem Kondensator C1 in Durchlassrichtung zwischengeschaltete Diode D6 verhindert einen Ladungsrückfluss vom Kondensator Clüber die Bypassleitung 12. Ebenfalls zur Verhinderung eines Stromrückflusses vom Kondensator C1 dient noch eine weitere Diode D7, die in Durchlassrichtung zwischen das Netzteil 17 und den Kondensator C1 geschaltet ist. Der Kondensator C1 ist eingangsseitig weiterhin mit der Versorgungsklemme 9 verbunden, an der die Versorgungsspannung Uv gegen Masse M abgreifbar ist.

Die Regelschaltung 14 umfasst einen Komparatör K1, dessen Eingang (-) über einen aus den Widerständen R1 und R2 gebildeten Spannungsteiler mit einer zur Versorgungsspannung Uv proportionalen Eingangsspannung versorgt wird. Zur Bereitstellung einer Referenzspannung Ur ist die Versorgungsklemme 9 über einen Widerstand R3 und eine in Sperrrichtung betriebene Zener-Diode D8 mit Masse M verbunden. Die durch die Durchlassspannung der Zener-Diode D8 gegebene Referenzspannung Ur wird dabei zwischen dem Widerstand R3 und der Zener-Diode D8 abgegriffen und dem Referenzeingang (+) des Komparators K1 zugeführt. Die Betriebspotenzialeingänge des Komparators sind einerseits auf die Versorgungsspannung Uv und andererseits auf Masse M gelegt. Der Ausgang des Komparators K1 ist mit der Basis eines PNP-Transistors T1 verbunden, der emitterseitig an der Versorgungsspannung Uv und kollektorseitig über einen Widerstand R4 an Masse M anliegt. Der Transistor T1 ist außerdem kollektorseitig über einen Widerstand R5 mit dem Gate-Anschluss eines selbstsperrenden MOSFETs F1 verbunden.

Der MOSFET F1 ist dabei die schaltungstechnische Realisierung des Bypass-Schaltelements 13. Sein Gate-Anschluss ist daher der in FIG 1 gezeigte Steueranschluss 15. Zur Realisierung der Bypassleitung 12 ist der MOSFET F1 drain-seitig zwischen die Dioden D2, D6 und D3 geschaltet. Source-seitig ist der MOSFET F1 über einen Messwiderstand R6 auf Masse M gelegt.

Die Schaltung gemäß FIG 2 ist derart dimensioniert, dass die am Eingang (-) des Komparators K1 anliegende Eingangsspannung die Referenzspannung Ur übersteigt, solange die Versorgungsspannung Uv ausreichend groß ist. In diesem Fall ist der Ausgang des Komparators K1 auf Massenpotenzial geschaltet. Dadurch wiederum ist die Emitter-Kollektor-Strecke des Transistors T1 elektrisch leitend, wodurch am Gate-Anschluss 15 des MOSFET F1 ein positives Potenzial anliegt. Der MOSFET F1 ist dadurch durchgängig geschaltet, so dass die Zener-Diode D1 je nach Stromrichtung über die Bauteile D2, F1, R6 und D4 oder D3, F1, R6, D5 äußerst verlustarm kurzgeschlossen ist.

Unterschreitet die Versorgungsspannung Uv den vorgegebenen Grenzwert, so schaltet der Komparator K1 ausgangsseitig auf positives Potenzial. Infolge dessen sperren sowohl der Transistor T1 als auch der MOSFET F1. Die Bypassleitung 12 ist somit geschlossen und der Kondensator C1 wird über den Brückengleichrichter 18 aufgeladen.

Zum Schutz des MOSFETs F1 ist ein Strombegrenzungselement vorgesehen, das den Messwiderstand R6 und einen NPN-Transistor T2 umfasst. Der Transistor T2 ist dabei über die Basis-Emitter-Strecke dem Messwiderstand R6 parallelgeschaltet und kollektorseitig mit dem Gate-Anschluss 15 des MOSFET's F1 verbunden. Die über dem Messwiderstand R6 abfallende Spannung wird dabei als Maß für den durch die Bypassleitung 12 fließenden Strom herangezogen. Übersteigt diese Spannung einen vorgegebenen Grenzwert, so wird der Transistor T2 leitend und zieht den Gate-Anschluss 15 auf Massenpotenzial M, wodurch der MOSFET F1 sperrt.

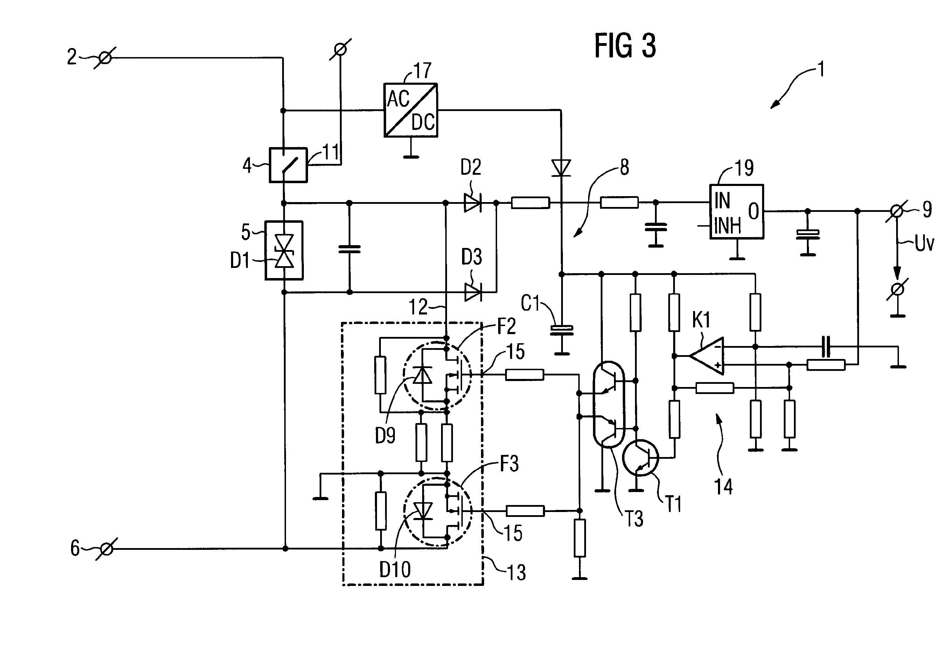

In FIG 3 ist eine alternative schaltungstechnische Realisierung des Zweileiterschalters 1 dargestellt. Im Unterschied zu dem in FIG 2 gezeigten Schaltbild ist hier das Bypass-Schaltelement 13 durch zwei MOSFETs F2, F3 mit jeweils einer integrierten Substratdiode D9, D10 gebildet, die bezüglich ihrer Source-Drain-Strecke zueinander anti-seriell in die Bypassleitung 12 geschaltet sind. Die MOSFETS F2,F3 sind dabei derart angeordnet, dass die Durchlassrichtungen der Substratdioden D9,D10 voneinander weg gerichtet sind. Die Substratdioden D9,D10 bilden in dieser Beschaltung zusammen mit den Dioden D2 und D3 wiederum einen Brückengleichrichter. Die Gate-Anschlüsse der MOSFETs F2 und F3 sind parallel gelegt und bilden den Steuereingang 15 des Bypass-Schaltelements 13 und werden vom Komparator K1 über den Transistor T1 und eine Transistor-Push-Pull-Stufe T3 angesteuert. Die Transistor-Push-Pull-Stufe T3 dient der Verbesserung der Schaltflankensteilheit bei Ansteuerung der MOSFETS F2 und F3.

Zur weiteren Stabilisierung der Vorsorgungsspannung Uv ist in dem in FIG 3 gezeigten Beispiel dem Kondensator C1 ein Spannungsstabilisator 19 nachgeschaltet, der vorzugsweise eine konstante Ausgangsspannung von 4 Volt liefert.

## Patentansprüche

1. Spannungsversorgung (16) mit einem Spannungsbegrenzungselement (5) zum Auskoppeln einer gegenüber der Netzspannung (Un) reduzierten Speisespannung (Us) aus einer Netzleitung (L) an ein mit dem Spannungsbegrenzungselement (5) verbundenes Speichermodul (8), an dem eine Versorgungsspannung (Uv) abgreifbar ist, und mit einer, dem Spannungsbegrenzungselement (5) parallelgeschalteten, verlustarmen Bypassleitung (12) sowie mit einer Regelschaltung (14), die bedarfsangepasst zur Aufladung des Speichermoduls (8) eine Sperrung der Bypassleitung (12) herbeiführt.

2. Spannungsversorgung nach Anspruch 1, **dadurch gekennzeichnet, dass** das Spannungsbegrenzungselement (5) eine bidirektionale Zener-Diode (D1) ist.

3. Spannungsversorgung nach einem der Ansprüche 1 oder 2, **dadurch gekennzeichnet, dass** das Speichermodul (8) einen Gleichrichter (18) und einen diesem nachgeschalteten Kondensator (C1) umfasst.

4. Spannungsversorgung nach einem der Ansprüche 1 bis 3, **dadurch gekennzeichnet, dass** die Regelschaltung (14) einen eingangsseitig mit dem Speichermodul (8) verbundenen Komparator (K1) umfasst, der ausgangsseitig mit dem Steuereingang (15) eines in die Bypassleitung (12) geschalteten Bypass-Schaltelements (13) verbunden ist.

5. Spannungsversorgung nach Anspruch 4, **dadurch gekennzeichnet, dass** das Bypass-Schaltelement (13) ein Feldeffekttransistor (F1) ist.

6. Spannungsversorgung nach Anspruch 4, **dadurch gekennzeichnet, dass** das Bypass-Schaltelement (13) ein Relaiskontakt ist.

7. Spannungsversorgung nach Anspruch 4, **dadurch gekennzeichnet, dass** das Bypass-Schaltelement (13) durch zwei anti-seriell in die Bypassleitung (12) geschaltete Feldeffekttransistoren (F2,F3) gebildet ist.

8. Spannungsversorgung nach einem der Ansprüche 4 bis 7, **dadurch gekennzeichnet, dass** dem Komparator (K1) und dem Bypass-Schaltelement (13) ein Transistor (T1) zwischengeschaltet ist.

9. Spannungsversorgung nach einem der Ansprüche 3 bis 8,
**dadurch gekennzeichnet, dass** der Gleichrichter ein aus Schottky-Dioden aufgebauter Brückengleichrichter (18) ist.

10. Spannungsversorgung nach einem der Ansprüche 1 bis 9, **dadurch gekennzeichnet, dass** in der Bypassleitung (12) ein Strombegrenzungselement (R6,T2) vorgesehen ist.

11. Spannungsversorgung nach Anspruch 10, **dadurch gekennzeichnet, dass** das Strombegrenzungselement einen in die Bypassleitung (12) geschalteten Messwiderstand (R6) sowie einen über die Basis-Emitter-Strecke dem Messwiderstand (R6) parallelgeschalteten und kollektorseitig mit dem Steuereingang (15) des Bypass-Schaltelements (13) verbundenen Transistor (T2) umfasst.

12. Zweileiterschalter (1) mit einer Spannungsversorgung (16) nach einem der Ansprüche 1 bis 11, wobei der Spannungsversorgung (16) ein elektronisch ansteuerbarer Netzleitungsschalter (4) vorgeschaltet ist.

13. Zweileiterschalter nach Anspruch 12, **gekennzeichnet durch** ein Netzteil (17), das eingangsseitig mit dem Eingang des Netzleitungsschalters (4) verbunden ist, und das ausgangsseitig mit dem Speichermodul (8) verbunden ist.

14. Zweileiterschalter nach Anspruch 12 oder 13, **dadurch gekennzeichnet, dass** dem Netzleitungsschalter (4) ein Netzstrombegrenzer (3) vorgeschaltet ist.

15. Zweileiterschalter nach Anspruch 14, **dadurch gekennzeichnet, dass** der Netzstrombegrenzer (3) eine Kleinsicherung ist.
